# EUROPEAN PATENT APPLICATION

(11) **EP 3 106 909 A1**
(43) Date of publication of application: **21.12.2016**
(21) Application number: 15193122.7
(22) Date of filing: 05.11.2015
(51) Int. Cl.: G02B 19/00, F21V 5/08

(54) **ASYMMETRICAL LIGHT DISTRIBUTION TOTAL INTERNAL REFLECTION LENS**

(30) Priority: 18.06.2015 TW 104119760
(71) Applicant: Industrial Technology Research Institute, Chutung Hsinchu 31040 (TW)
(72) Inventor: HSU, Ke-Fang, Hsinchu County 310 (TW); LIN, Chih-Wei, Hsinchu County 302 (TW); HWANG, Jung-Min, Hsinchu City, 300 (TW); HUANG, Chi-Chun, Miaoli County 351 (TW); LEE, Li-Ling, Hsinchu County 307 (TW); CHEN, Mei-Wen, New Taipei City 220 (TW)
(74) Representative: Becker Kurig Straus

(57) **Abstract**

An asymmetrical light distribution total internal reflection lens adapted to be disposed on a light source is provided. The asymmetrical light distribution total internal reflection lens includes a body, a light incident refraction part, a light emitting surface and a total reflection surface. The body has a center axis. The light incident refraction part is located on a bottom of the body, and the light incident refraction part is a notch, used to dispose the light source. The light emitting surface is located on a top of the body and has a first surface and a second surface which are connected and not parallel to each other. The total reflection surface is located on a side part of the body, and the total reflection surface is connected with the light incident refraction part and the light emitting surface.

## Description

### Technical Field

The disclosure relates to a total internal reflection lens, and particularly relates to an asymmetrical light distribution total internal reflection lens able to produce an asymmetrical light distribution.

### BACKGROUND

Since an LED light source has features such as high efficiency and small volume, an optical design for an application may have a variety of variations. A traditional LED light source has a Lambertian light distribution and condensation may be performed through secondary optics designs such as a reflective cup, a lens or the like. Currently, optical elements on the market may condense an incident light ray into 10° , 20° , 30° , 40° or the like symmetric light distribution. However, since the secondary optical elements on the market are still designs having symmetrical type light distribution, therefore for a larger exhibit, problems will arise where the illumination of an upper part of an exhibit is extremely bright but the lower part is not bright enough, and affecting the aesthetics and the viewing comfort when exhibiting a show piece. If it is desired to further enhance the uniformity of the illumination, a method on the market is to increase the tilt angle of the lighting and lengthening the distance between the exhibit and the lighting, however this method is susceptible to producing reflective glare on the showcase glass. And this poor design for illuminating exhibits not only causes stress on the eyes of a viewer, it also interferes with the viewer's ability to focus on appreciating the exhibit and lowers the quality of the exhibit.

In order to enhance the uniformity of the illumination, an asymmetrical light distribution total internal reflection lens is a good selection choice for lowering the reflective glare on the showcase glass and for performing design of the light distribution so as to focus on the vibrancy of the external geometry of the exhibit. If the light distribution design is asymmetrical such as a triangular shape, then the asymmetrical light distribution may be used to adjust the spatial light intensity according to a distance between the surface being illuminated and the lamp along a vertical direction, so as to effectively enhance the uniformity of the illuminated surface of the exhibit. At the same time, the lamp does not need to be pulled to the outside of the showcase and the issue of reflective glare on the glass of the showcase is resolved. In this way, focus may be put on the original exhibit, providing a high quality museum illumination experience.

### SUMMARY

Accordingly, the disclosure proposes an asymmetrical light distribution total internal reflection lens able to produce an asymmetrical light distribution.

The asymmetrical light distribution total internal reflection lens proposed in the disclosure is adapted to be disposed on a light source, and the asymmetrical light distribution total internal reflection lens includes a body, a light incident refraction part, a light emitting surface and a total reflection surface. The body has a center axis. The light incident refraction part is located at a bottom of the body, wherein the light incident refraction part is a notch, and used to dispose the light source. The light emitting surface is located at a top of the body and has a first surface and a second surface. The first surface and the second surface are connected with each other and not parallel to each other. The total reflection surface is located at a side part of the body, wherein the total reflection surface is connected with the light incident refraction part and the light emitting surface.

In an embodiment of the disclosure, the first surface is a plane, and the second surface is an inclined surface. In a section produced by passing through a lowest point of the second surface and the center axis, a first projection length of the light emitting surface in a horizontal direction is D and a second projection length of the second surface in the horizontal direction is d, wherein d is between 1/4D∼3/4D.

In an embodiment of the disclosure, an angle is formed by an intersection of extending directions of the first surface and the second surface, and the angel is between 115°∼175°.

In an embodiment of the disclosure, the second surface includes a plurality of micro-structures, the micro-structures are two dimensional strip structures extending along an axis direction respectively, wherein the axis direction is parallel or perpendicular to an incline direction of the second surface.

In an embodiment of the disclosure, the micro-structures are a V-shaped structures, and a base angel of each of the micro-structures is between 15°~60°.

In an embodiment of the disclosure, the micro-structures are arc structures, and a radius of each of the micro-structures is between 50µm∼100µm.

In an embodiment of the disclosure, radiuses of the micro-structures gradually increase outwardly from the center axis.

In an embodiment of the disclosure, a pitch of the micro-structures is 0.05 mm ∼ 2 mm.

In an embodiment of the disclosure, a connecting point of the first surface and the second surface is a round corner, and a radius of the round corner is 0∼50 mm.

In an embodiment of the disclosure, the light incident refraction part is parallel to the center axis and extends towards an interior of the body, and the light incident refraction part has a side surface parallel to the center axis and a top surface, and the top surface is a convex surface or a plane.

Several exemplary embodiments accompanied with figures are described in detail below to further describe the disclosure in details.

### BRIEF DESCRIPTION OF THE DRAWINGS

The accompanying drawings are included to provide a further understanding of the disclosure, and are incorporated in and constitute a part of this specification. The drawings illustrate embodiments of the disclosure and, together with the description, serve to explain the principles of the disclosure.
FIG. 1(a) is a light field chart of an upper triangular light distribution according to an embodiment of the disclosure.
FIG. 1(b) is a light field chart of a middle triangular light distribution according to an embodiment of the disclosure.
FIG. 1(c) is a light field chart of a lower triangular light distribution according to an embodiment of the disclosure.
FIG. 2 is a schematic diagram illustrating a structure of an asymmetrical light distribution total internal reflection lens according to an embodiment of the disclosure.
FIG. 3 is a schematic diagram illustrating a cross-section of an asymmetrical light distribution total internal reflection lens according to an embodiment of the disclosure.
FIG. 4(a) is a diagram illustrating a light path of an asymmetrical light distribution total internal reflection lens according to an embodiment of the disclosure.
FIG. 4(b) is a light field sketch chart of an asymmetrical light distribution total internal reflection lens according to an embodiment of the disclosure.
FIG. 5(a) is a light field chart of an asymmetrical light distribution total internal reflection lens according to an embodiment of the disclosure when radiuses of micro-structures are 50 µm.
FIG. 5(b) is a light field chart of an asymmetrical light distribution total internal reflection lens according to an embodiment of the disclosure when radiuses of micro-structures are 60 µm.
FIG. 5(c) is a light field chart of an asymmetrical light distribution total internal reflection lens according to an embodiment of the disclosure when radiuses of micro-structures are 80 µm.
FIG. 5(d) is a light field chart of an asymmetrical light distribution total internal reflection lens according to an embodiment of the disclosure when radiuses of micro-structures are 100 µm.
FIG. 5(e) is a light field chart of an asymmetrical light distribution total internal reflection lens according to an embodiment of the disclosure when a radius of a micro-structure of 60 µm, 80 µm, 100 µm respectively are mixed.
FIG. 6 is a schematic diagram illustrating a structure of an asymmetrical light distribution total internal reflection lens according to an embodiment of the disclosure.
FIG. 7 is a schematic diagram illustrating a cross-section of an asymmetrical light distribution total internal reflection lens according to an embodiment of the disclosure.
FIG. 8(a) is a light field chart of an asymmetrical light distribution total internal reflection lens according to an embodiment of the disclosure when base angles of micro-structures are 15°.
FIG. 8(b) is a light field chart of an asymmetrical light distribution total internal reflection lens according to an embodiment of the disclosure when base angles of micro-structures are 30°.
FIG. 8(c) is a light field chart of an asymmetrical light distribution total internal reflection lens according to an embodiment of the disclosure when base angles of micro-structures are 45°.
FIG. 8(d) is a light field chart of an asymmetrical light distribution total internal reflection lens according to an embodiment of the disclosure when base angles of micro-structures are 60°.
FIG. 9 is a schematic diagram illustrating a structure of an asymmetrical light distribution total internal reflection lens according to an embodiment of the disclosure.
FIG. 10 is a schematic diagram illustrating a cross-section of an asymmetrical light distribution total internal reflection lens according to an embodiment of the disclosure.

### DETAILED DESCRIPTION

In the following detailed description, for purposes of explanation, numerous specific details are set forth in order to provide a thorough understanding of the disclosed embodiments. It will be apparent, however, that one or more embodiments may be practiced without these specific details. In other instances, well-known structures and devices are schematically shown in order to simplify the drawing.

Each of the embodiments of the disclosure mainly use an effect of an asymmetrical light distribution total internal reflection lens, such that a light beam emitted by a light source produces an asymmetrical light distribution after passing through the asymmetrical light distribution total internal reflection lens. Wherein, the asymmetrical light distribution refers to the distribution of a profile of light output is biased to protrude towards one direction, and a protruding location, for example, is between 15∼30 degrees. A light intensity of the protruding location accounts for a particular proportion of a maximum light intensity, and may be categorized into various types of different triangular light distributions, so as to provide uses for different exhibit showcase illuminations.

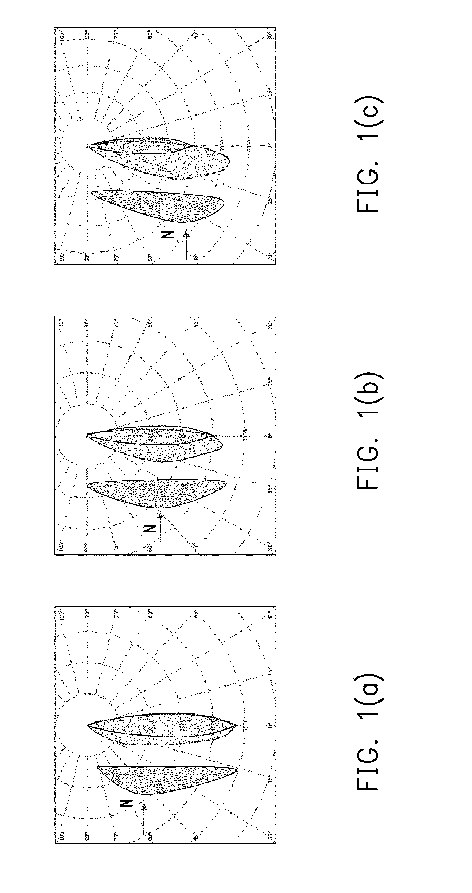

FIG. 1(a), FIG. 1(b), and FIG. 1(c) are light field charts of an upper, middle and lower triangular light distributions respectively. The sketch on the left side of the figures are an actual profile of light output simplified into a triangular shape for the convenience of explanation. In FIG. 1(a), the upper triangular light distribution refers to the light distribution having a protruding location located relatively high, such as shown in the sketch wherein the light intensity of a protrusion location N at 15∼30 degrees accounts for 25∼35% of the maximum light intensity. This type of light distribution is adapted for illuminating high end exhibits inside a showcase glass and prevents the reflective glare. In FIG. 1(b), the middle triangular light distribution refers to the light distribution having a protruding location located near the middle, such as shown in the sketch wherein the light intensity of a protrusion location N at 15∼30 degrees accounts for 55∼65% of the maximum light intensity. This type of light distribution is adapted for illuminating painting exhibits to provide uniform lighting. In FIG. 1(c), the lower triangular light distribution refers to the light distribution having a protruding location located relatively low, such as shown in the sketch wherein the light intensity of a protrusion location N at 15∼30 degrees accounts for 65∼75% of the maximum light intensity. This type of light distribution is adapted for illuminating large Buddhist statues to provide uniform vertical illumination lighting.

In order to achieve the various triangular light distributions mentioned above, the disclosure provides various embodiments below.

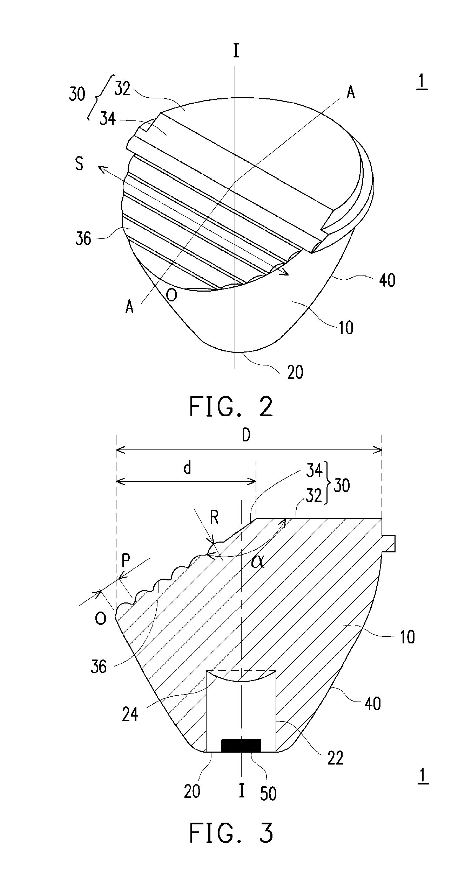

Referring to FIG. 2 and FIG. 3. FIG. 2 is a schematic diagram illustrating a structure of an asymmetrical light distribution total internal reflection lens according to an embodiment of the disclosure. FIG. 3 is a schematic diagram illustrating a cross-section of an asymmetrical light distribution total internal reflection lens according to an embodiment of the disclosure. An asymmetrical light distribution total internal reflection lens 1 is adapted to be disposed on a light source 50. The asymmetrical light distribution total internal reflection lens 1 includes a body 10, a light incident refraction part 20, a light emitting surface 30 and a total reflection surface 40. The light source 50 may be a light emitting diode, wherein a light beam emitted by the light source 50 produces an asymmetrical light distribution by passing through the asymmetrical light distribution total internal reflection lens 1. The body 10 has a center axis I. The light incident refraction part 20 is located on a bottom of the body 10. The light incident refraction part 20 is a notch, and is used for disposing the light source 50. The light emitting surface 30 is located at a top of the body 10. The light emitting surface 30 has a first surface 32 and a second surface 34 connecting with each other, wherein the first surface 32 and the second surface 34 are not parallel to each other. The total reflection surface 40 is located at a side part of the body 10, and the total reflection surface 40 is connected with the light incident refraction part 20 and the light emitting surface 30. The light beam emitted by the light source 50 produces deflection after entering the body 10 through the light incident refraction part 20, and is ejected out of the body 10 from the light emitting surface 30 after total internal reflection is performed at the total reflection surface 40, so as to produce the upper triangular asymmetrical light distribution as shown in FIG. 1(a).

Specifically, the body 10 is a transparent cone that is wide at the top and narrow at the bottom, however the disclosure is not limited thereto. The shape of the body 10 affects the total reflection surface 40 located at the side part. The shape of the light incident refraction part 20 and the total reflection surface 40 may control a size of the beam angle. The light incident refraction part 20 is parallel to the center axis I of the body 10 and extends towards the interior of the body 10. The light incident refraction part 20 has a side surface 22 parallel to the center axis I and a top surface 24. In the present embodiment, the top surface 24 may be a convex surface. In other embodiments, the top surface 24 may be a plane, however the disclosure is not limited thereto.

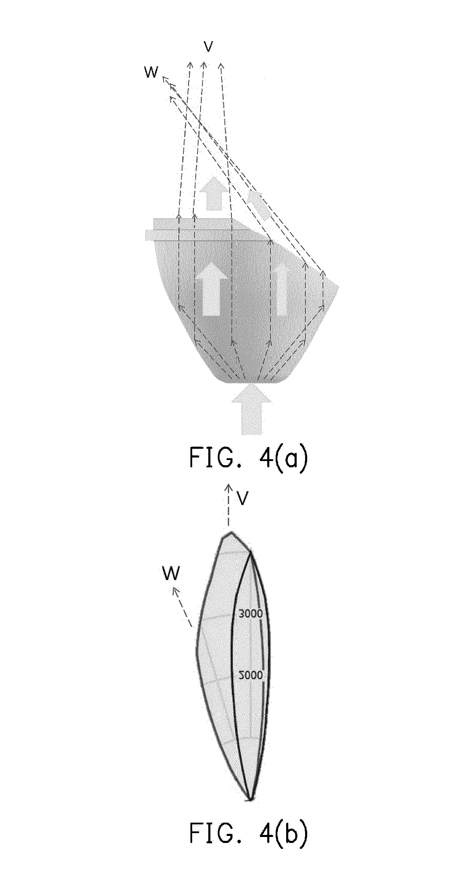

Referring to FIG. 4(a) and FIG. 4(b). FIG. 4(a) is a diagram illustrating a light path of an asymmetrical light distribution total internal reflection lens according to an embodiment of the disclosure. FIG. 4(b) is a light field sketch chart of an asymmetrical light distribution total internal reflection lens according to an embodiment of the disclosure. In the present embodiment, the first surface 32 of the light emitting surface 30 is a plane, and the second surface 34 is an inclined surface. A purpose of designing the first surface 32 and the second surface 34 to be intersected with each other rather than parallel to each other is for producing light beams of two different directions. After the light beam emitted by the light source 50 enters the body 10, the light beam emits mainly in a first direction V when emitting out through the first surface 32. When the light beam emits out through the second surface 34, the light beam emitting out produces deflections due to the inclined surface design of the second surface 34, causing the light beam to emit out in a second direction W. In this way, the asymmetrical profile of light output distribution is biased to protrude towards the second direction W as shown in FIG. 4(b) is formed.

Accordingly, a proportion of the configuration of the first surface 32 and the second surface 34 affects the light intensity of the protrusion location N. Corresponding to FIG. 2, a section line A-A is a connecting line passing through a lowest point O of the second surface 34 and the center axis I. FIG. 3 is a schematic diagram of a section produced along the section line A-A. In the section, a first projection length of the light emitting surface 30 along a horizontal direction is D, and a second projection length of the second surface 34 along the horizontal direction is d, wherein d is between 1/4D∼3/4D. It should be noted that, if the second projection length d is too large, it will cause a majority of the light beam of the light source 50 entering the body 10 to be emitted out through the second surface 34 so as to produce a light beam emitting out in the second direction W, such that the profile of light output distribution is biased overall to protrude towards the second direction W, and there is no (or only a small amount) light emitted in a forward direction, and therefore the desired triangular profile of light output is unable to be produced. On the other hand, if the second projection length d of the second surface 34 along the horizontal direction is too small, there will be no (or only a small amount) light beam emitted in the second direction W, such that the profile of light output distribution is overall retained in the forward direction, and the desired triangular profile of light output is also unable to be produced.

An angle α may be formed by an intersection of the extending directions of the first surface 32 and the second surface 34, and the angel α is between 115°∼175°. In the present embodiment, the angle α is 145°, however the disclosure is not limited thereto. In addition, the second surface 34 may also include a plurality of micro-structures 36, so as to perform secondary condensation to control the location of the asymmetrical triangular light distribution. The micro-structures 36 are two dimensional strip structures extending along an axis direction respectively, wherein the axis direction is parallel or perpendicular to the incline direction of the second surface 34. A pitch P of the micro-structures 36 is 0.05 mm ~ 2 mm. In the present embodiment, the asymmetrical light distribution total internal reflection lens 1 adopts the pitch P of 1.4 mm. The micro-structures 36 are semi-circular arc structures, and a radius R of each of the micro-structures 36 is between 50µm∼100µm, and the micro-structures 36 extend along the axis direction S respectively, wherein the axis direction S is perpendicular to the incline direction of the second surface 34.

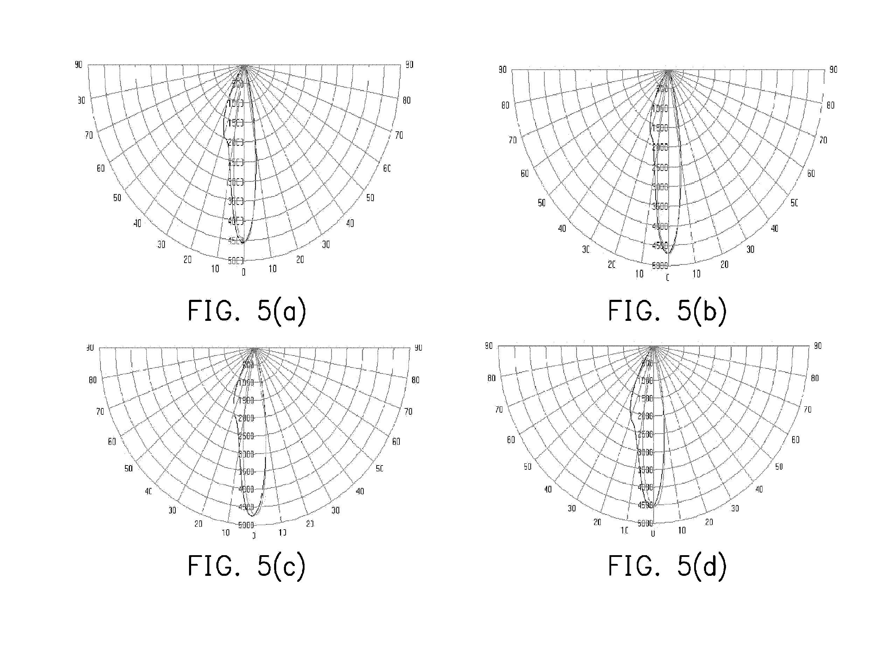

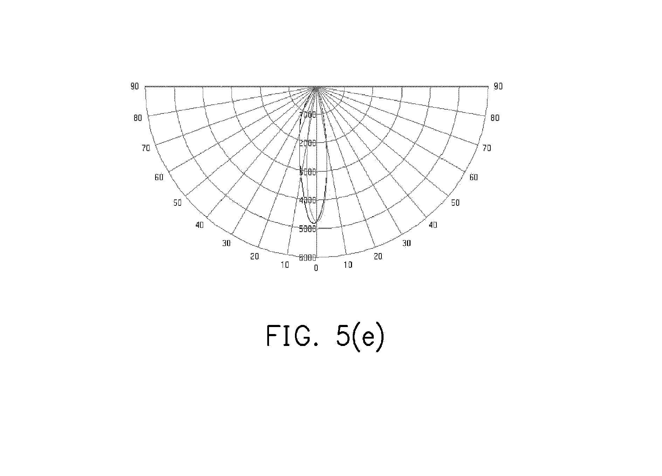

Referring to FIG. 5(a)∼FIG. 5(e). FIG. 5(a)∼FIG. 5(d) are light field charts of an asymmetrical light distribution total internal reflection lens according to an embodiment of the disclosure when radiuses of micro-structures are 50 µm, 60 µm, 80 µm, 100 µm, respectively. It may be seen from the FIG. 5(a)∼FIG. 5(d), sizes of the radiuses R of the micro-structures 36 affect the degree of protrusion of the triangular light distribution, however a situation occurs where the light distribution will have a recess part, therefore micro-structures 36 with various radius sized may be suitably mixed to perform adjustments, as shown in FIG. 5(e). FIG. 5(e) is a light field chart of an asymmetrical light distribution total internal reflection lens according to an embodiment of the disclosure when a radius of a micro-structure of 60 µm, 80 µm, 100 µm respectively are mixed. Specifically, the radiuses R of the micro-structures 36 gradually increase outwardly from the center axis I. That is to say, the micro-structures 36 closer to the lowest point O of the second surface 34 have larger radiuses R. In the present embodiment, two strips of each micro-structure 36 size is disposed, and gradually increase outwardly along the center axis I and by 60 µm, 80 µm, 100 µm. It may be seen that the situation with the recess part is improved, achieving a smooth upper triangular light distribution.

The light distribution of the recess part may also be improved through a round corner design. Specifically, the connecting point of the first surface 32 and the second surface 34 is a round corner F, wherein a radius r of the round corner F is 0∼50 mm, such that the round corner may prevent the separation of the light distribution from occurring. In the present embodiment, in order to accommodate producing the upper triangular light distribution, the radius r of the round corner F may be designed from 0∼2.5 mm, however the disclosure is not limited thereto. It should be noted that, when the radius r of the round corner F is 0, it refers to a situation in which the connecting point of the first surface 32 and the second surface 34 is not a round corner, such as is shown in FIG. 2 and FIG. 3.

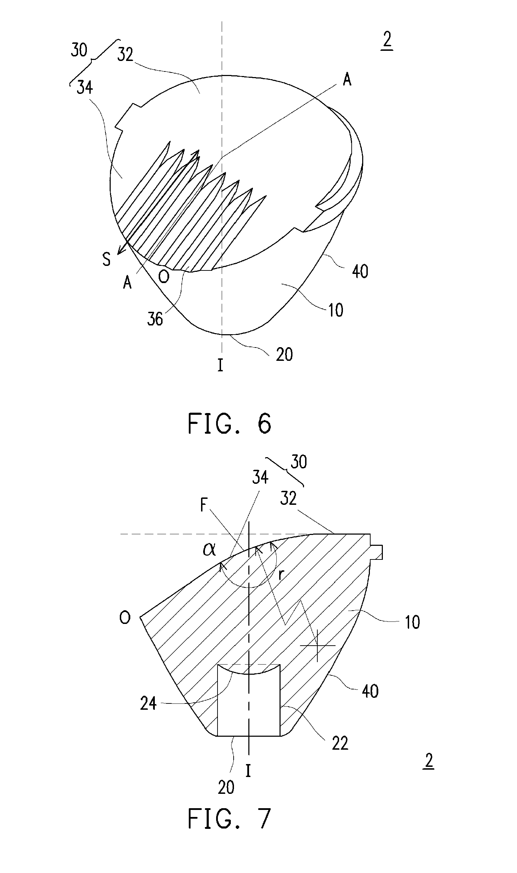

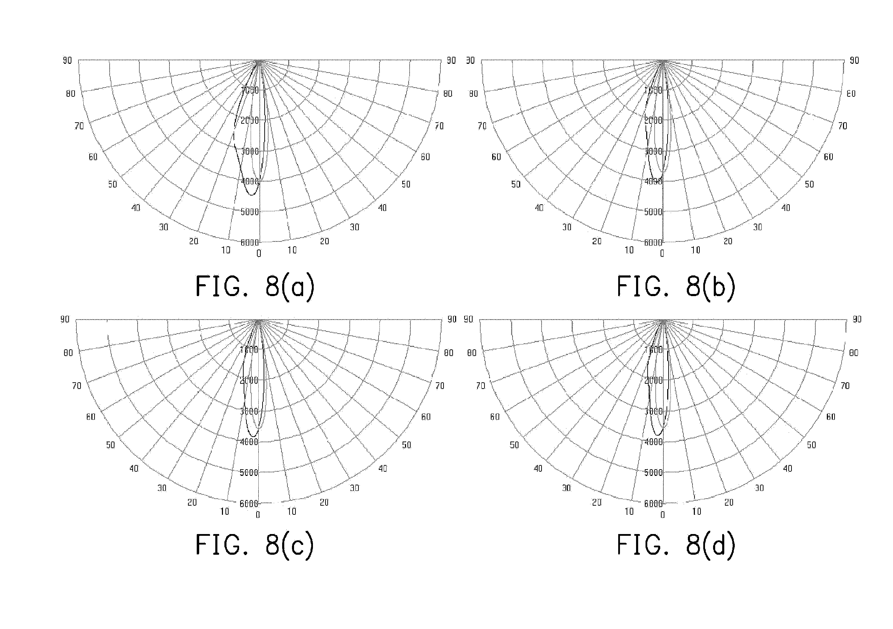

Referring to FIG. 6 and FIG. 7. FIG. 6 is a schematic diagram illustrating a structure of an asymmetrical light distribution total internal reflection lens according to an embodiment of the disclosure. FIG. 7 is a schematic diagram illustrating a cross-section of an asymmetrical light distribution total internal reflection lens according to an embodiment of the disclosure. Corresponding to FIG. 6, a section line A-A is a connecting line passing through a lowest point O of the second surface 34 and the center axis I. FIG. 7 is a schematic diagram of a section produced along the section line A-A. The difference between the embodiments of FIG. 2 and FIG. 3 is that, in the present embodiment, the asymmetrical light distribution total internal reflection lens 2 adopts the pitch P of 1.4 mm, wherein the micro-structures 36 are isosceles triangle V-shaped structures with base angles of 15° and extending along the axis direction S respectively. The axis direction S and the incline direction of the second surface 34 are parallel, so as to produce the middle triangular asymmetrical light distribution as shown in FIG. 1(b). In other embodiments, the base angles of the micro-structures 36 may be between 15°~60°. Referring to FIG. 8(a)∼FIG. 8(d), FIGs. 8(a)∼8(d) are light field chart of an asymmetrical light distribution total internal reflection lens according to an embodiment of the disclosure when base angles of micro-structures are 15°, 30°, 45°, 60°, respectively. It may be seen from FIGs. 8(a)∼8(d) that sizes of the base angles of the micro-structures 36 affect the protrusion location of the triangular light distribution. In addition, in the present embodiment, in order to accommodate producing the middle triangular light distribution, the radius r of the round corner F may be designed from 0.5∼45 mm, so as to prevent the situation where the light distribution separates, however the disclosure is not limited thereto.

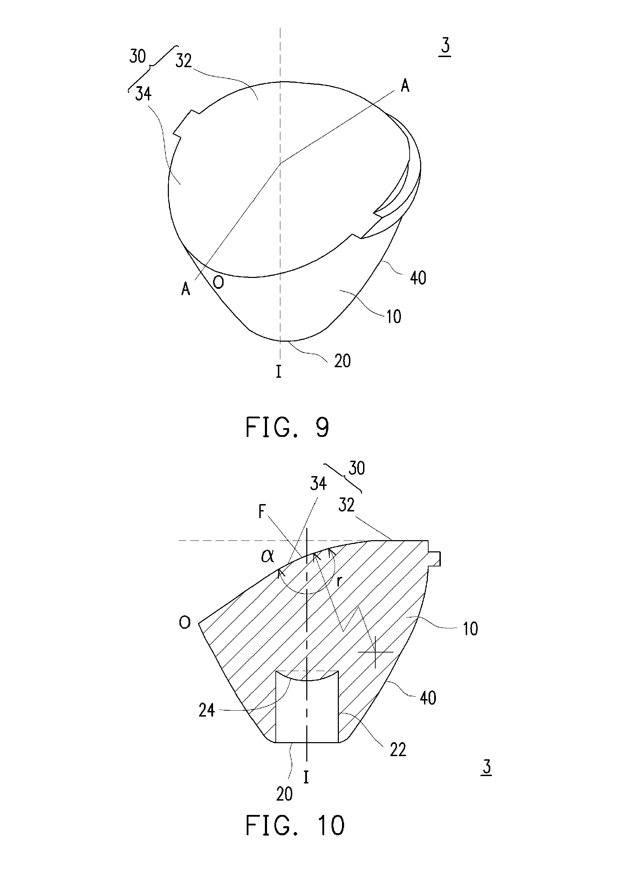

Referring to FIG. 9 and FIG. 10. FIG. 9 is a schematic diagram illustrating a structure of an asymmetrical light distribution total internal reflection lens according to an embodiment of the disclosure. FIG. 10 is a schematic diagram illustrating a cross-section of an asymmetrical light distribution total internal reflection lens according to an embodiment of the disclosure. Corresponding to FIG. 9, a section line A-A is a connecting line passing through a lowest point O of the second surface 34 and the center axis I. FIG. 10 is a schematic diagram of a section produced along the section line A-A. The difference between the embodiments of FIG. 2 and FIG. 3 is that, in the present embodiment, the micro-structures 36 are not disposed on the second surface 34 of the asymmetrical light distribution total internal reflection lens 3, and there is only the round corner F of the connecting point of the first surface 32 and the second surface 34, so as to produce the lower triangular asymmetrical light distribution as shown in FIG. 1(c). In addition, in order to accommodate producing the lower triangular light distribution, the radius r of the round corner F may be designed from 18∼50 mm, so as to prevent the situation where the light distribution separates, however the disclosure is not limited thereto.

In summary, the asymmetrical light distribution total internal reflection lens may adjust the protrusion location of the asymmetrical triangular light distribution through the design of the first surface and the second surface connecting so as to not be parallel to each other and accompanied by the design of the angle of the intersecting first surface and the second surface, the round corner and the disposition of the micro-structures, such that the light beam emitted by the light source is deflected after entering the body through the light incident refraction part, and is ejected out of the body by the light emitting surface after total internal reflection is performed by the total reflection surface, so as to produce triangular asymmetrical light distributions suitable for various exhibit illuminations, so as to achieve uniform lighting and preventing reflective glare.

## Claims

1. An asymmetrical light distribution total internal reflection lens (1, 2, 3) adapted to be disposed on a light source (50), the asymmetrical light distribution total internal reflection lens (1, 2, 3) comprising:
a body (10), having a center axis (I);
a light incident refraction part (20), located at a bottom of the body (10), wherein the light incident refraction part (20) is a notch, and used to dispose the light source (50);
a light emitting surface (30), located at a top of the body (10), the light emitting surface (30) having a first surface (32) and a second surface (34) connecting with each other, wherein the first surface (32) and the second surface (34) are not parallel to each other; and
a total reflection surface (40), located at a side part of the body (10), wherein the total reflection surface (40) is connected with the light incident refraction part (20) and the light emitting surface (30).

2. The asymmetrical light distribution total internal reflection lens (1, 2, 3) as claimed in claim 1, wherein the first surface (32) is a plane, the second surface (34) is an inclined surface, in a section produced by passing through a lowest point (O) of the second surface (34) and the center axis (I), a first projection length of the light emitting surface (30) along a horizontal direction is D, and a second projection length of the second surface (34) along the horizontal direction is d, wherein d is between 1/4D∼3/4D.

3. The asymmetrical light distribution total internal reflection lens (1, 2, 3) as claimed in claim 1, wherein an angle (α) is formed by an intersection of extending directions of the first surface (32) and the second surface (34), and the angel (α) is between 115°∼1750.

4. The asymmetrical light distribution total internal reflection lens (1, 2, 3) as claimed in claim 2, wherein the second surface (34) comprises a plurality of micro-structures (36), the micro-structures (36) are two dimensional strip structures extending along an axis direction (S) respectively, wherein the axis direction (S) is parallel or perpendicular to an incline direction of the second surface (34).

5. The asymmetrical light distribution total internal reflection lens (1, 2, 3) as claimed in claim 4, wherein the micro-structures (36) are V-shaped structures, and a base angel of each of the micro-structures (36) is between 15°~60°.

6. The asymmetrical light distribution total internal reflection lens (1, 2, 3) as claimed in claim 4, wherein the micro-structures (36) are arc structures, and a radius (R) of each of the micro-structures (36) is between 50µm∼100µm.

7. The asymmetrical light distribution total internal reflection lens (1, 2, 3) as claimed in claim 6, wherein radiuses (R) of the micro-structures (36) gradually increase outwardly from the center axis (I).

8. The asymmetrical light distribution total internal reflection lens (1, 2, 3) as claimed in claim 4, wherein a pitch (P) of the micro-structures (36) is 0.05 mm ∼ 2 mm.

9. The asymmetrical light distribution total internal reflection lens (1, 2, 3) as claimed in claim 1, wherein a connecting point of the first surface (32) and the second surface (34) is a round corner (F), and a radius (r) of the round corner (F) is 0∼50 mm.

10. The asymmetrical light distribution total internal reflection lens (1, 2, 3) as claimed in claim 1, wherein the light incident refraction part (20) is parallel to the center axis (I) and extends towards an interior of the body (10), and the light incident refraction part (20) has a side surface (22) parallel to the center axis (I) and a top surface (24), and the top surface (24) is a convex surface or a plane.
